# EUROPÄISCHE PATENTANMELDUNG

(11) **EP 3 017 729 A1**
(43) Veröffentlichungstag der Anmeldung: **11.05.2016**
(21) Anmeldenummer: 15192492.5
(22) Anmeldetag: 02.11.2015
(51) Int. Cl.: A47J 31/36

(54) **BRÜHGRUPPE FÜR EIN GETRÄNKEZUBEREITUNGSGERÄT**

(30) Priorität: 05.11.2014 DE 102014116116
(71) Anmelder: Metzke, Karl-Heinz, 88046 Friedrichshafen (DE)
(72) Erfinder: Metzke, Karl-Heinz, 88046 Friedrichshafen (DE)
(74) Vertreter: Köchling, Conrad-Joachim

(57) **Zusammenfassung**

Die Erfindung betrifft eine Brühgruppe für ein Getränkezubereitungsgerät, bestehend aus einem am Gerät befestigten Grundkörper (1) mit Durchströmbereich (2), einem in den Grundkörper (1) einsetzbaren oder eingesetzten Halter (3) für ein Teil, welches Bestandteile zur Zubereitung eines Getränkes beinhaltet, insbesondere eine Kapsel mit Getränkezutaten, einem Brühkopf (4), der einen Anschluss für Brühmittel, insbesondere heißes Wasser, und eine Abgabeöffnung für das Brühmittel zum Zuführen des Brühmittels zu dem die Getränkezutaten aufnehmendem Teil aufweist, wobei der Brühkopf (4) und das Teil oder der Halter (3) zueinander mittels eines an dem Grundkörper (1) gehaltenen Stellhebel (5) aus einer Vorbereitungslage, in der der Brühkopf (4) von dem Teil oder dem Halter beabstandet ist, in eine Arbeitslage, in der der Brühkopf (4) an dem Teil oder dem Halter (3) anliegt, verstellbar sind, wobei der Brühkopf (4) mittels des Stellhebels (5) beweglich ist und das die Getränkezutaten aufnehmende Teil und dessen Halter (3) unbeweglich im Grundkörper (1) gehalten ist.

## Beschreibung

Die Erfindung betrifft eine Brühgruppe für ein Getränkezubereitungsgerät, bestehend aus einem am Gerät befestigten Grundkörper mit Durchströmbereich, einem in den Grundkörper einsetzbaren oder eingesetzten Halter für ein Teil, welches Bestandteile zur Zubereitung eines Getränkes beinhaltet, insbesondere eine Kapsel mit Getränkezutaten, einem Brühkopf, der einen Anschluss für Brühmittel, insbesondere heißes Wasser, und eine Abgabeöffnung für das Brühmittel zum Zuführen des Brühmittels zu dem die Getränkezutaten aufnehmendem Teil aufweist, wobei der Brühkopf und das Teil oder der Halter zueinander mittels eines an dem Grundkörper gehaltenen Stellhebel aus einer Vorbereitungslage, in der der Brühkopf von dem Teil oder dem Halter beabstandet ist, in eine Arbeitslage, in der der Brühkopf an dem Teil oder dem Halter anliegt, verstellbar sind.

Brühgruppen dieser Art sind im Stand der Technik bekannt. Sie werden häufig für sogenannte Kapselsysteme benutzt, bei denen das Teil, welches Bestandteile zur Zubereitung eines Getränkes beinhaltet oder aufnimmt, eine Kapsel ist. Üblicherweise wird eine derartige Kapsel in die Brühgruppe eingeführt, wenn diese sich in der Vorbereitungslage befindet. Anschließend wird die Brühgruppe in die Arbeitslage verstellt. Das Getränkezubereitungsgerät kann dann in Betrieb genommen werden, wobei die Brühgruppe dann von heißem Wasser durchströmt wird, welches als Filtrat aus der Ablauföffnung der Brühgruppe ablaufen kann und in eine darunter befindliche Tasse oder dergleichen abgefüllt werden kann.

Die im Stand der Technik bekannten Brühgruppen dieser Art sind von der konstruktiven Lösung her aufwendig und daher kostenintensiv. Darüber hinaus wird bei den bekannten Brühgruppen beim Verstellen von der Vorbereitungslage in die Arbeitslage und zurück in die Vorbereitungslage der Kapselhalter oder ein den Kapselhalter tragendes Element bewegt, was kinematisch aufwendig ist und bei längerer Benutzungsdauer zu Problemen führen kann.

Ausgehend von diesem Stand der Technik liegt der Erfindung die Aufgabe zugrunde, eine Brühgruppe gattungsgemäßer Art zu schaffen, die vom Aufbau her äußerst einfach ist, bei der nur wenige Funktionsteile erforderlich sind und die infolge ihrer Konstruktion langlebig und störungsfrei ist.

Zur Lösung dieser Aufgabe schlägt die Erfindung vor, dass der Brühkopf mittels des Stellhebels beweglich ist und das die Getränkezutaten aufnehmende Teil oder dessen Halter unbeweglich im Grundkörper gehalten ist.

Anders als bei herkömmlichen Geräten wird gemäß der Erfindung der Brühkopf bewegt, um die Brühgruppe aus der Vorbereitungslage in die Arbeitslage zu überführen und aus der Arbeitslage wieder zurück in die Vorbereitungslage zu führen. Hierdurch wird die gewünschte Funktion gefördert und die Langlebigkeit positiv beeinflusst.

Eine besonders bevorzugte Ausgestaltung hierzu wird darin gesehen, dass der Stellhebel an einem distalen Endbereich eine Handhabe bildet und an mindestens einem proximalen Endbereich einen Zapfen aufweist, der ein Lagerauge des Grundkörpers durchgreift und in diesem drehbar gelagert ist und dessen Zapfen drehfest mit einem Schwenkhebel verbunden ist, der an einer Verlängerung einen Stellzapfen aufweist, der in eine Führungskurve eingreift, die am Brühkopf ausgebildet ist, wobei vorzugsweise auch der Zapfen oder eine Verlängerung des Zapfens, die am Schwenkhebel ausgebildet ist, in die Führungskurve eingreift.

Gemäß dieser Ausgestaltung sind nur wenige, einfach aufgebaute technische Mittel erforderlich, um die entsprechende Betriebsweise zu ermöglichen. Der Stellhebel ist ein einfaches längliches Bedienelement, welches am distalen Ende eine Handhabe bildet, die der Benutzer ergreifen und mittels derer der Benutzer die Bedienung vornehmen kann. Am anderen, nämlich dem proximalen Endbereich weist dieser Stellhebel mindestens einen Zapfen auf, der in mindestens ein Lagerauge des Grundkörpers eingreift, beziehungsweise dieses durchgreift. Die Lagerung des Stellhebels erfolgt in diesem Durchgriffsbereich an dem Grundkörper, sodass der Hebel quasi um diesen Zapfen drehbar ist. Gegebenenfalls kann in dem Grundkörper die Anordnung von Lagerungs- oder Führungshülsen vorgesehen sein, um die Bedienbarkeit und die Langlebigkeit zu fördern. Der Grundkörper besteht üblicherweise aus Kunststoffmaterial. Der Grundkörper kann ein separates Element sein, welches an eine entsprechende Getränkezubereitungsmaschine montiert werden kann oder aber der Grundkörper kann auch integraler Bestandteil der Getränkezubereitungsmaschine sein.

Der Zapfen ist drehfest mit einem Schwenkhebel gekoppelt zum Beispiel steckverbunden, der eine angemessene Länge aufweist. Am einen Ende des Schwenkhebels ist der Zapfen drehfest angeordnet, während am anderen Ende des Schwenkhebels ein Stellzapfen ausgebildet ist, der in eine Führungskurve eingreift, die am Brühkopf ausgebildet ist. Hiermit wird erreicht, dass bei Betätigung des Stellhebels eine Drehung des Stellhebels im Lagerauge des Grundkörpers möglich ist, wobei durch die Drehbewegung der Schwenkhebel geschwenkt wird und der an seiner Verlängerung befindliche Stellzapfen in der Führungskurve einen bestimmten Weg beschreibt, wodurch der Brühkopf in der einen Endlage in die Vorbereitungslage verstellt ist und in der anderen Endlage in die Arbeitslage verstellt ist. Der Verstellmechanismus ist äußerst einfach aufgebaut und lang andauend funktionstüchtig.

Der Schwenkhebel kann im Bereich der Kopplung mit dem Zapfen des Stellhebels eine angeformte Hülse aufweisen, die innen eine Polygonausnehmung aufweist und außen glatt zylindrisch ausgebildet ist. Der Zapfen ist ebenfalls als Polygon ausgeformt und passend in die Hülse eingesteckt, wodurch eine Drehmitnahme sichergestellt ist. Die zylindrische Mantelfläche der Hülse - die gleichgerichtet wie der Stellzapfen vom Schwenkhebel abragt - kann bei der bestimmungsgemäßen Benutzung an Führungskanten der Führungskurve geführt sein.

Eine des Weiteren bevorzugte Ausgestaltung wird darin gesehen, dass der Grundkörper eine Aufnahme für den Brühkopf aufweist, die eine Mittelachse bildet, die parallel oder koaxial zur Verstellrichtung des Brühkopfes ausgerichtet ist, und dass die Führungskurve quer zu der Mittelachse ausgerichtet an der Außenfläche des Brühkopfes ausgebildet ist, wobei der Stellzapfen in der Arbeitslage in einem ersten Endbereich der Führungskurve sitzt und der Zapfen oder dessen Verlängerung zum Beispiel eine Hülse mit dem Stellzapfen auf einer ersten Geraden liegt, die parallel zur Mittelachse gerichtet ist, und der Stellzapfen in der Vorbereitungslage in einem zweiten Endbereich der Führungskurve sitzt und der Zapfen oder dessen Verlängerung mit dem Stellzapfen auf einer zweiten Geraden liegt, die quer zum Verlauf der ersten Geraden gerichtet ist.

Die Führungskurve ist zum Beispiel L-förmig ausgeformt, wobei im horizontalen Schenkel der L-Form der Stellzapfen geführt ist und den Brühkopf bewegt, während im vertikalen Schenkel der L-Form der Zapfen beziehungsweise die Hülse, in die der Zapfen eingreift, vertikal bewegbar geführt ist, entsprechend der Bewegung des Brühkopfes.

Hierbei weist der Grundkörper an seinem dem Brühkopf gegenüberliegenden Endbereich eine Aufnahme für den Brühkopf auf, sodass dieser in den Grundkörper einschiebbar oder in Richtung des Grundkörpers verstellbar ist und in entgegengesetzter Richtung verstellbar ist. Diese Aufnahme bildet quasi eine Linearführung für den Brühkopf. Des Weiteren bildet der Grundkörper eine Mittelachse, die parallel oder auch koaxial zur Verstellrichtung des Brühkopfes ausgerichtet ist. Die am Brühkopf vorzugsweise außenseitig vorgesehene Führungskurve ist mit einem Führungsschenkel quer zur Mittelachse ausgerichtet an der Außenfläche des Brühkopfes angeordnet und ausgebildet, wobei diese Führungskurve quasi tangential an dem Brühkopf ausgerichtet ist und zwar quer zur Mittelachse, die die Verstellrichtung bildet.

Der Stellzapfen oder die diesen übergreifende Hülse an der Verlängerung des Schwenkhebels sitzt in der Arbeitslage in einem ersten Endbereich der Führungskurve, wobei in dieser Position der Zapfen mit dem Stellzapfen auf einer ersten Geraden liegt, die parallel zur Mittelachse ausgerichtet ist. In der Vorbereitungslage sitzt der Stellzapfen in einem zweiten Endbereich der Führungskurve und der Zapfen liegt mit dem Stellzapfen auf einer zweiten Geraden, die den Bereich des Verlaufs der ersten Geraden kreuzt, also vorzugsweise rechtwinklig dazu ausgerichtet ist.

Bevorzugt ist dabei vorgesehen, dass der Stellzapfen in der Arbeitslage gegenüber einer Position, die der ersten Geraden entspricht, über diese hinaus zur entgegengesetzten Seite der Führungskurve verlagert ist und dort seine Arbeitsposition einnimmt.

Gemäß der Erfindung ist hierbei die Ausrichtung des Stellzapfens in der Arbeitslage gegenüber einer Position, die der ersten Geraden entspricht, über diese hinaus zur entgegengesetzten Seite der Führungskurve verlagert, sodass der Stellhebel zum Verstellen des Brühkopfes um mehr als 90° verschwenkt wird, um diese Position einzunehmen. Hierdurch wird erreicht, dass der Stellzapfen quasi über die kritische Totlage hinaus verstellt ist, wobei die kritische Totlage diejenige Lage ist, in der der Stellzapfen mit dem Zapfen auf der ersten Geraden liegt. Diese Position ist labil und dann, wenn die Brühgruppe in Betrieb genommen wird, möglicherweise nicht ausreichend sicher, da sich die Brühgruppe aufgrund des anstehenden Druckes bei der Getränkezubereitung selbständig öffnen könnte. Dadurch, dass der Stellzapfen über diese Position hinaus verstellt ist, bewirkt der Brühdruck bei Inbetriebnahme der Brühgruppe eher helfend, weil der Brühdruck dann in Schließrichtung des Brühkopfes wirksam wird und dieser nicht zufällig in die Vorbereitungslage verstellt werden kann, sondern die Schließkraft noch erhöht wird.

Bevorzugt ist zudem vorgesehen, dass die Führungskurve mit Führungsrandteilen, die den Stellzapfen führen, leicht um den Zapfen gebogen verläuft.

Hierdurch wird die Betätigung erleichtert und die Führungskurve dem Weg des Stellzapfens angepasst, wenn dieser mittels des Stellhebels bewegt wird.

Besonders bevorzug ist zudem vorgesehen, dass der Stellzapfen und der Zapfen oder dessen Verlängerung in der Arbeitslage auf einer dritten Geraden liegen, die mit der ersten Gerade einen Winkel von bis zu 5° einschließt.

Die Wirkung dieser Ausgestaltung ist oben schon näher beschrieben. Es wird also eine Selbstschließhaltung der Brühgruppe erreicht.

Bevorzugt ist zudem vorgesehen, dass der Brühkopf entgegen der Kraft von mindestens einer Rückstellfeder aus der Vorbereitungslage in die Arbeitslage verstellbar ist.

Hierdurch wird erreicht, dass der Brühkopf beim Verstellen aus der Vorbereitungslage in die Arbeitslage entgegen der Federkraft verschoben wird, wobei nach Beendigung des Brühvorganges und nach dem anschließenden Überführen des Brühkopfes aus der Arbeitslage in die Vorbereitungslage die Stellbewegung durch Federkraft unterstützt wird.

Bevorzugt ist zudem vorgesehen, dass der Brühkopf Aufnahmebuchsen für das eine Ende von Rückstellfedern aufweist, deren anderes Ende sich an Bestandteilen des Grundkörpers abstützen.

Hierdurch ist eine sichere Anordnung und Halterung der Rückstellfedern erreicht.

Zudem ist es hierdurch möglich, auf einem Montagekreis des Brühkopfes mehrere Aufnahmebuchsen und damit auch Rückstellfedern über den Verlauf gleichmäßig anzuordnen und zu verteilen, um eine gleichmäßige Belastung des Brühkopfes durch die Rückstellfedern sicherzustellen.

Zudem kann vorgesehen sein, dass zwischen einer Anlageschulter des Grundkörpers und/oder des Halters und einem an diese anlegbaren Rand des Brühkopfes eine elastische Dichtung angeordnet ist. Vorzugsweise ist die Dichtung am Brühkopf fixiert.

Besonders bevorzugt kann vorgesehen sein, dass im Brühkopf Anstechmittel zum Perforieren des die Bestandteile zum Zubereiten eines Getränkes aufnehmenden Teils sowie ein von diesen durchgreifbarer Abstreifer, der mittels einer eingespannten Feder in eine Auswerfposition verstellbar ist, gehalten sind und im Halter weitere Anstechmittel zum Perforieren des die Bestandteile zum Zubereiten eines Getränkes aufnehmenden Teils unter Beibehalt einer Durchströmöffnung angeordnet sind.

Auch kann vorgesehen sein, dass der Stellhebel an seinem proximalen Endbereich gabelartig ausgebildet ist, wobei an den Enden der Gabel jeweils ein Zapfen angeordnet ist, und dass der Grundkörper in gegenüberliegenden Wandbereichen Lageraugen aufweist, in denen jeweils einer der Zapfen drehbar gelagert ist, und dass der Brühkopf entsprechend an zwei einander abgewandten gegenüberliegenden Wandbereichen Führungskurven aufweist, in die jeweils ein Stellzapfen eines mit jedem Gabelende gekoppelten Schwenkhebels eingreift, wobei jeder Schwenkhebel eine Verlängerung des Zapfens bildet oder aufweist, die ebenfalls in der Führungskurve sitzt.

Zudem ist bevorzugt vorgesehen, dass der Grundkörper eine seitliche Einschuböffnung aufweist, in die ein becherähnlicher Halter für ein Teil, welches Bestandteile zur Zubereitung des Getränkes beinhaltet, einschiebbar oder entnehmbar ist, wobei der Halter eine quer abragende Handhabe aufweist, die in der eingesetzten Betriebslage seitlich aus dem Grundkörper vorragt.

Ein Ausführungsbeispiel der Erfindung ist in der Zeichnung dargestellt und im Folgenden näher beschrieben.

Es zeigt:
- Figur 1: eine erfindungsgemäße Brühgruppe in Explosionsdarstellung;
- Figur 2: die Brühgruppe in Montagesolllage in der geöffneten Vorbereitungslage;
- Figur 3: desgleichen im Schnitt A-A der Figur 2 gesehen;
- Figur 4: die Brühgruppe in der Arbeitslage in einer Ansicht analog Figur 3 gesehen;
- Figur 5: die Brühgruppe in der Arbeitslage in einer anderen Schnittebene;
- Figur 6: die Brühgruppe in der Arbeitslage Mit teilweise weggeschnittenem Hebelarm eines Stellhebels;
- Figur 7: desgleichen in der Vorbereitungslage gesehen.

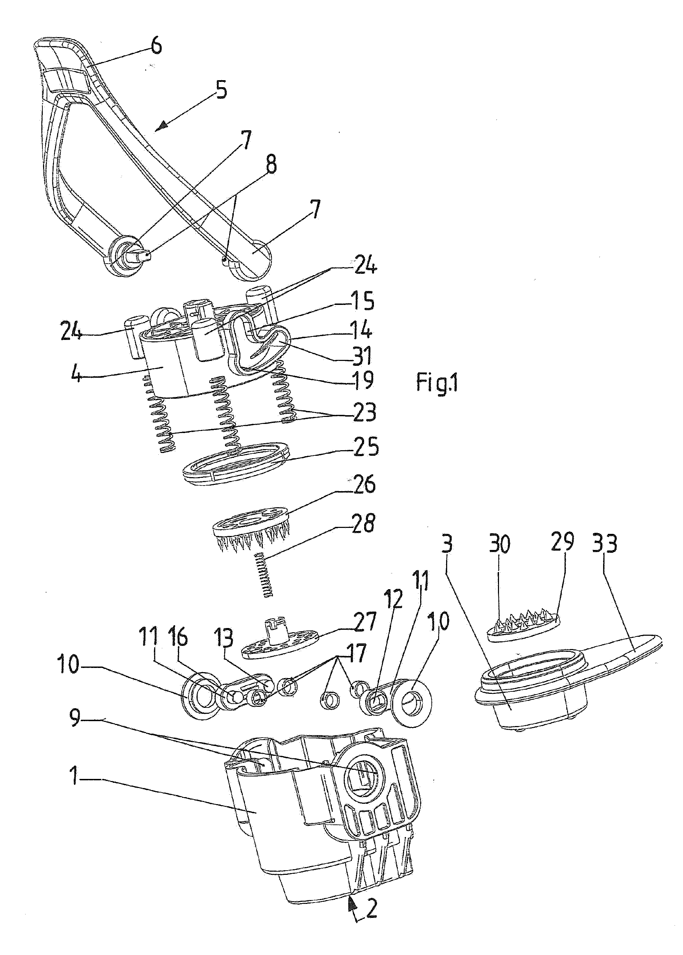

In der Zeichnung ist die Brühgruppe für ein Getränkezubereitungsgerät gezeigt. Sie besteht aus einem am Gerät befestigten oder integral mit dem Gerät ausgebildeten Grundkörper 1, der in der Zeichnungsfigur 1 oben offen ist und unten eine oder mehrere Durchströmöffnungen 2 aufweist oder bildet. Ferner besteht sie aus einem in den Grundkörper 1 einsetzbaren oder eingesetzten Halter 3 für ein Teil, welches Bestandteile zur Zubereitung eines Getränkes beinhaltet, beispielsweise eine Kapsel mit Getränkezutaten. Des Weiteren besteht sie aus einem Brühkopf 4, der in Figur 1 oben einen Anschluss für ein Brühmittel, beispielsweise heißes Wasser aufweist und unten eine Abgabeöffnung hierfür zum Zuführen des Brühmittels zu dem die Getränkezutaten aufnehmenden Teil, welches in dem Halter 3 sitzt. Der Brühkopf 4 ist relativ zum Halter 3 mittels eines am Grundkörper 1 gehaltenen Stellhebels 5 beweglich, sodass die Teile aus einer Vorbereitungslage, in der der Brühkopf 4 von dem Teil 3 beabstandet ist in eine Arbeitslage überführbar ist, in der der Brühkopf 4 an dem Teil 3 anliegt.

Erfindungsgemäß ist der Brühkopf 4 mittels des Stellhebels 5 beweglich, während das die Getränkezutaten aufnehmende Teil 3 unbeweglich im ebenfalls unbeweglichen Grundkörper 1 gehalten ist.

Wie beispielsweis aus Figur 1 ersichtlich, bildet der Stellhebel 5 an seinem distalen Endbereich eine Handhabe 6, an der der Benutzer zugreifen kann, um den Hebel zu bewegen. An mindestens einem proximalen Endbereich 7 weist der Stellhebel 5 einen Zapfen 8 auf, der eine von der Kreisform abweichende, zum Beispiel polygonale Querschnittsform hat, und der mit einem zylindrischen Abschnitt ein Lagerauge 9 des Grundkörpers 1 durchgreift und in diesem drehbar gelagert ist. Zur Verbesserung der Lagereigenschaften können noch Lagerscheiben 10 in das Lagerauge 9 eingesetzt sein. Der Zapfen 8 ist drehfest mit einem Schwenkhebel 11 steckverbunden, wobei dieser Schwenkhebel 11 ein der Form des Zapfens 8 angepasstes Lagerauge 12 und an dieses anschließend eine vorragende Hülse aufweist. Der Schwenkhebel 11 weist an einer Verlängerung einen hülsenartigen, zylindrischen Stellzapfen 13 auf, der in eine Führungskurve 14 eingreift, die am Brühkopf 4 außenseitig ausgebildet ist. Die Führungskurve 14 bildet ein Drehlager für einen Zapfen 16 (die Hülse) der koaxial zu dem Lagerauge 12 ausgerichtet ist. Zur Verbesserung der Lagereigenschaften kann noch eine Lagerhülse 17 aufgesteckt sein, ebenso wie auf den Zapfen 13. Dieser Stellzapfen 13 gleitet bei der bestimmungsgemäßen Schwenkbewegung des Stellhebels 6 in der Führungskurve 14, wodurch der Brühkopf 4 in die Vorbereitungslage oder in die Arbeitslage verstellt wird.

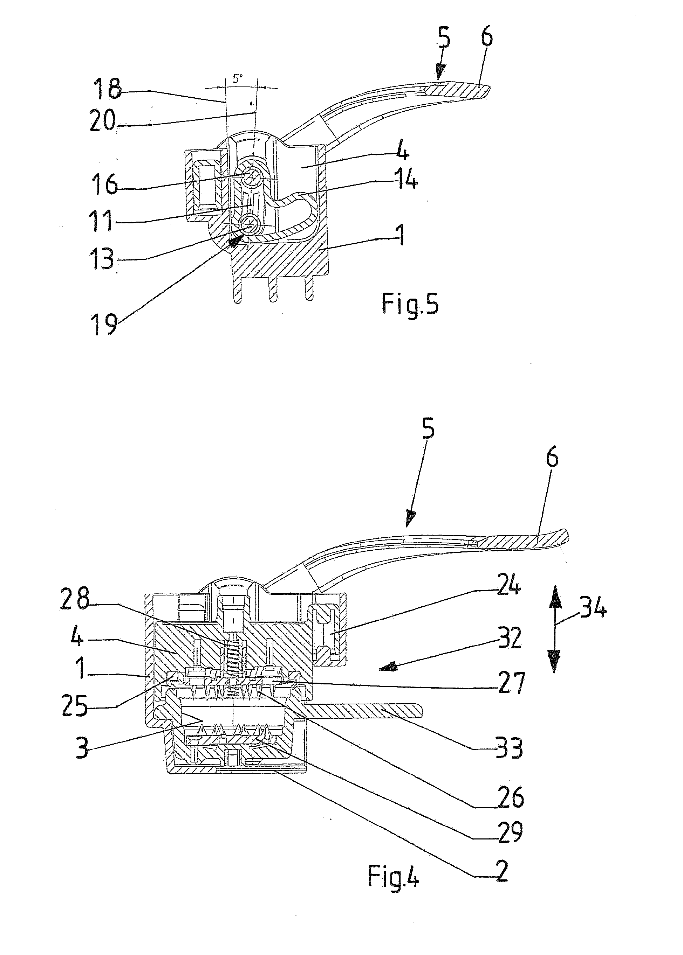

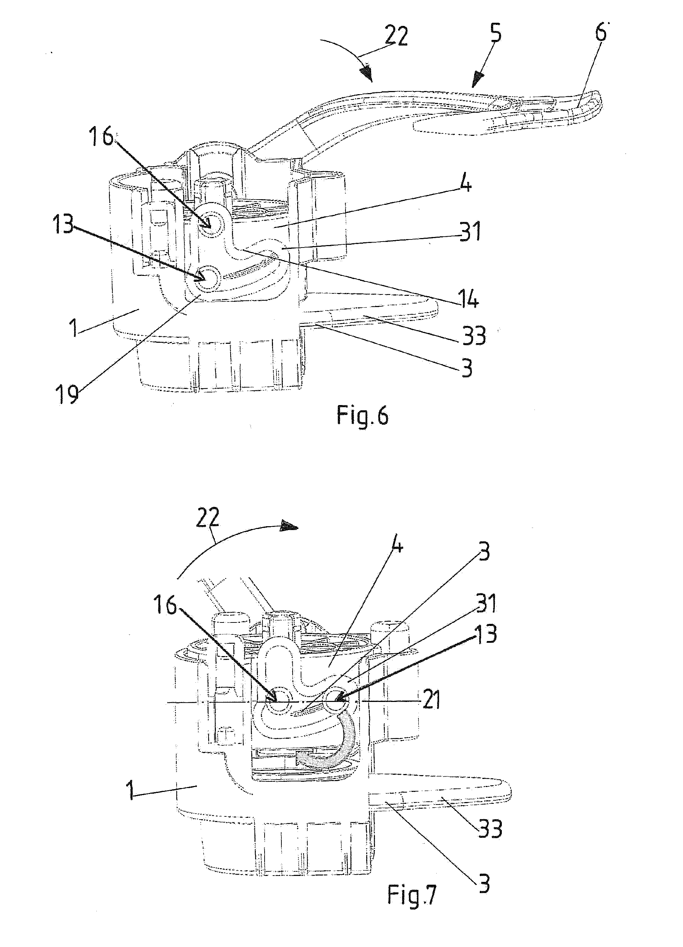

Insbesondere weist der Grundkörper 1 eine Aufnahme für den Brühkopf 4 auf, in die der Brühkopf zumindest teilweise eingreift, sodass dieser in einer linearen Bewegung praktisch vertikal zum Brühkopf 1 geführt ist. Der Grundkörper 1 bildet damit quasi eine (Mittel)achse 18, die parallel oder koaxial zur Verstellrichtung des Brühkopfes 4 ausgerichtet ist. Die Führungskurve 14 ist quer zu dieser (Mittel)achse 18 ausgerichtet, wie besonders gut in Figur 5 ersichtlich ist und an der Außenfläche des Brühkopfes 4 angeordnet und ausgebildet. Der Stellzapfen 13 sitzt in der Arbeitslage, die in Figur 5 und Figur 6 beispielsweise gezeigt ist, in einem ersten Endbereich 19 der Führungskurve 14, wobei der Stellzapfen 8, beziehungsweise der dessen Verlängerung bildende Zapfen 16, mit dem Stellzapfen 13 auf einer ersten Geraden 20 liegt, die nicht exakt parallel zur (Mittel)achse 18 gerichtet ist, sondern um 5° über die Mittellage hinaus verlagert ist, sodass sich eine Schrägstellung ergibt.

In der Vorbereitungslage sitzt der Stellzapfen 13 in einem zweiten Endbereich 31 der Führungskurve 14 und der Zapfen 8 liegt mit dem Stellzapfen 13 auf einer zweiten Geraden 21, die in Figur 7 angedeutet ist, und die quer zum Verlauf der ersten Geraden 20 gerichtet ist. Die Drehrichtung des Stellhebels 6 aus der Vorbereitungslage gemäß Figur 7 in die Arbeitslage gemäß Figur 6 ist mit dem Richtungspfeil 22 angegeben.

Wie insbesondere in Figur 5 verdeutlicht, liegt der Stellzapfen 13 in der Arbeitslage etwas über die vertikale Mittellage hinaus in Drehrichtung 22 verlagert. Hierdurch wird erreicht, dass die Brühgruppe in der Arbeitslage selbstschließend ist, wenn sich Druck beim Zuführen des Brühmittels (heißes Wasser) aufbaut. In diesem Falle wirkt die Druckerhöhung in Schließrichtung auf die Teile ein, sodass die Dichtigkeit verbessert, aber nicht verschlechtert wird, wenn die Brühgruppe in Betrieb genommen wird.

Die Führungskurve 14 weist umlaufend Führungsrandteile auf, die als Führungselement dienen und den Stellzapfen 13 führen, aber auch den Zapfen 16, wie in Figur 7 verdeutlicht ist. Durch die Bewegung des Stellhebels 5 aus der Arbeitslage in die Vorbereitungslage, also entgegen der Drehrichtung des Pfeiles 22, erfolgt mittels des Schwenkhebels 11 eine Verstellung des Zapfens 13 in der Führungskurve 14 und zudem auch eine Verstellung der Führungskurve 14 relativ zum Zapfen 16 nach oben, der eine Verlängerung des Zapfens 8 bildet, wie aus der Gegenüberstellung der Figuren 6 und 7 ersichtlich ist. Es wird hierdurch die störungsfreie Bewegung des Brühkopfes 4 aus der Position in Figur 6 in die Position gemäß Figur 7 (nach oben verschoben) ermöglicht.

Zudem ist der Brühkopf 4 entgegen der Kraft von Rückstellfedern 23 aus der Vorbereitungslage in die Arbeitslage bewegt (analog Bewegungsteil 34), wobei die Rückstellfedern 23 in Aufnahmebuchsen 24 des Brühkopfes 4 mit einem Ende gehalten sind, wobei sich das andere Ende an Bestandteilen des Grundkörpers 1 abstützen. Zudem ist zwischen einer Anlageschulter des Grundkörpers 1 oder des Halters 3 und einem an diesen anlegbaren Rand des Brühkopfes 4 eine elastische Dichtung 25 angeordnet. Des Weiteren sind im Brühkopf 4 Anstechmittel 26 zum Perforieren des die Bestandteile zum Zubereiten eines Getränkes aufnehmenden Teils vorgesehen, sowie ein von diesen durchgreifbarer Abstreifer 27, der mittels einer zwischen die Teile gespannten Feder 28 in einer Auswerfposition verstellbar gehalten ist.

Im Halter 3 sind weiter Anstechmittel 29 zum Perforieren einer Kapsel im Halter 3 unter Beibehalt einer Durchströmöffnung 30 vorgesehen.

Wie beispielsweise aus Figur 1 ersichtlich, ist der Stellhebel 5 an seinem proximalen Ende gabelartig ausgebildet, wobei an den Enden der Gabel jeweils ein Zapfen 8 vorgesehen ist, entsprechend sind in gegenüberliegenden Wandbereichen des Grundkörpers 1 Lageraugen 9 vorgesehen und der Brühkopf 4 weist an zwei einander abgewandten gegenüberliegenden Wandbereichen jeweils Führungskurven 14 auf, in die jeweils ein Lagerzapfen 16 beziehungsweise Stellzapfen 13 eines mit jedem Gabelende gekoppelten Schwenkhebels 11 eingreift.

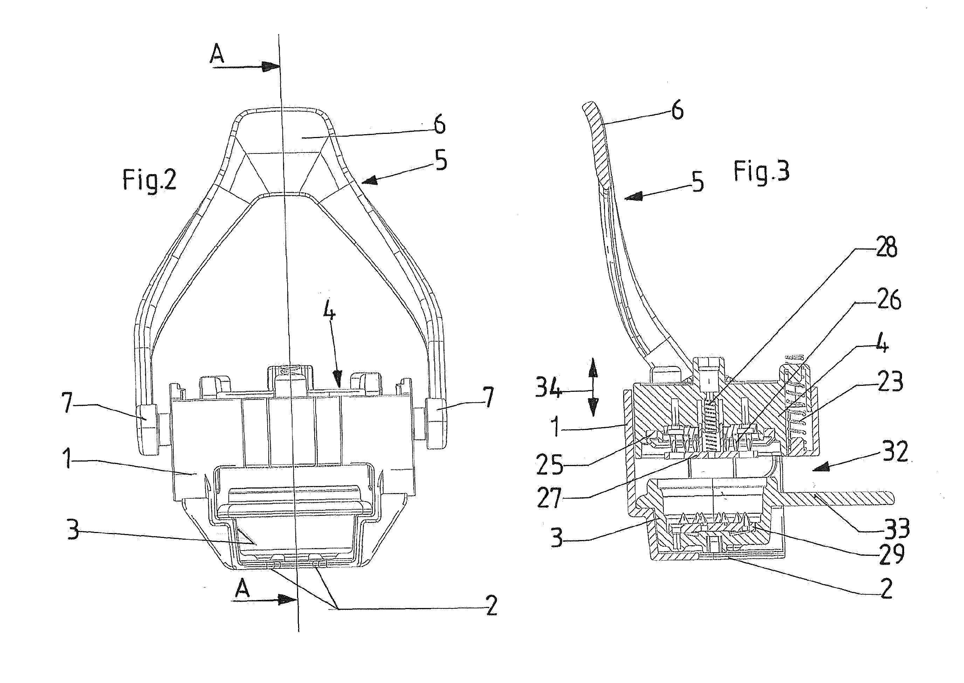

Wie beispielsweise in Figur 3 ersichtlich, weist der Grundkörper 1 eine seitliche Einschuböffnung 32 auf, in die der becherförmige Halter 3 einschiebbar, beziehungsweise aus welcher dieser entnehmbar ist, wobei der Halter 3 eine quer abragende Handhabe 33 aufweist, die in der eingesetzten Betriebslage (siehe Figur 3) seitlich aus dem Grundkörper 1 vorragt. Damit ist eine gute Handhabung des Halters 3 ermöglicht.

Wie in den Figuren ersichtlich, weist der Boden der Führungskurve 14 eine Rippe 35 auf die etwa von der Mitte der Führungskurve 14 bis zu deren zweiten Endbereich dicker wird. Hierdurch wird eine Reibhaltung zwischen dem Stellzapfen 13 und dem Brühkopf 4 erreicht, was für die Sicherung der Vorbereitungslage (vergleiche Figur 7) vorteilhaft ist.

Die Erfindung ist nicht auf das Ausführungsbeispiel beschränkt, sondern im Rahmen der Offenbarung vielfach variabel.

Alle in der textlichen Beschreibung und der Zeichnung offenbarten Merkmale werden als erfindungswesentlich angesehen.

### Bezugszeichenliste:

- 1: Grundkörper
- 2: Ablauföffnung an 1
- 3: Halter
- 4: Brühkopf
- 5: Stellhebel
- 6: distaler Endbereich von 5
- 7: proximaler Endbereich von 5
- 8: Zapfen von 5
- 9: Lagerauge von 1
- 10: Lagerhülse
- 11: Schwenkhebel
- 12: Lagerauge von 11
- 13: Stellzapfen
- 14: Führungskurve
- 15: Endbereich von 14 für 16
- 16: Lagerzapfen
- 17: Lagerhülse
- 18: erste Gerade
- 19: erster Endbereich von 14
- 20: dritte Gerade
- 21: zweite Gerade
- 22: Bewegungspfeil
- 23: Rückstellfeder
- 24: Aufnahmebuchse
- 25: Dichtung
- 26: Anstechmittel
- 27: Abstreifer
- 28: Feder
- 29: Anstechmittel
- 30: Durchströmöffnung
- 31: zweiter Endbereich von 14
- 32: seitliche Öffnung
- 33: Handhabe
- 34: Verstellrichtung
- 35: Rippe

## Patentansprüche

1. Brühgruppe für ein Getränkezubereitungsgerät, bestehend aus einem am Gerät befestigten Grundkörper (1) mit Durchströmbereich (2), einem in den Grundkörper (1) einsetzbaren oder eingesetzten Halter (3) für ein Teil, welches Bestandteile zur Zubereitung eines Getränkes beinhaltet, insbesondere eine Kapsel mit Getränkezutaten, einem Brühkopf (4), der einen Anschluss für Brühmittel, insbesondere heißes Wasser, und eine Abgabeöffnung für das Brühmittel zum Zuführen des Brühmittels zu dem die Getränkezutaten aufnehmendem Teil aufweist, wobei der Brühkopf (4) und das Teil oder der Halter (3) zueinander mittels eines an dem Grundkörper (1) gehaltenen Stellhebel (5) aus einer Vorbereitungslage, in der der Brühkopf (4) von dem Teil oder dem Halter beabstandet ist, in eine Arbeitslage, in der der Brühkopf (4) an dem Teil oder dem Halter (3) anliegt, verstellbar sind, **dadurch gekennzeichnet, dass** der Brühkopf (4) mittels des Stellhebels (5) beweglich ist und das die Getränkezutaten aufnehmende Teil und dessen Halter (3) unbeweglich im Grundkörper (1) gehalten ist.

2. Brühgruppe nach Anspruch 1, **dadurch gekennzeichnet, dass** der Stellhebel (5) an einem distalen Endbereich (6) eine Handhabe bildet und an mindestens einem proximalen Endbereich (7) einen Zapfen (8) aufweist, der ein Lagerauge (9) des Grundkörpers (1) durchgreift und in diesem drehbar gelagert ist und dessen Zapfen (8) drehfest mit einem Schwenkhebel (11) verbunden ist, der an einer Verlängerung einen Stellzapfen (13) aufweist, der in eine Führungskurve (14) eingreift, die am Brühkopf (4) ausgebildet ist, wobei vorzugsweise auch der Zapfen (8) oder eine Verlängerung (16) des Zapfens (8), die am Schwenkhebel (11) ausgebildet ist, in die Führungskurve (14) eingreift.

3. Brühgruppe nach Anspruch 2, **dadurch gekennzeichnet, dass** der Grundkörper (1) eine Aufnahme für den Brühkopf (4) aufweist, die eine Mittelachse bildet, die parallel oder koaxial zur Verstellrichtung (34) des Brühkopfes (4) ausgerichtet ist, und dass die Führungskurve (14) quer zu der Mittelachse ausgerichtet an der Außenfläche des Brühkopfes (4) ausgebildet ist, wobei der Stellzapfen (13) in der Arbeitslage in einem ersten Endbereich (19) der Führungskurve (14) sitzt und der Zapfen (8) oder dessen Verlängerung (16) mit dem Stellzapfen (13) auf einer ersten Geraden (18) liegt, die parallel zur Mittelachse gerichtet ist, und der Stellzapfen (13) in der Vorbereitungslage in einem zweiten Endbereich (31) der Führungskurve (14) sitzt und der Zapfen (8) oder dessen Verlängerung (16) mit dem Stellzapfen (13) auf einer zweiten Geraden (21) liegt, die quer zum Verlauf der ersten Geraden (18) gerichtet ist.

4. Brühgruppe nach Anspruch 3, **dadurch gekennzeichnet, dass** der Stellzapfen (13) in der Arbeitslage gegenüber einer Position, die der ersten Geraden (18) entspricht, über diese hinaus zur entgegengesetzten Seite der Führungskurve (14) verlagert ist und dort seine Arbeitsposition einnimmt.

5. Brühgruppe nach einem der Ansprüche 3 oder 4, **dadurch gekennzeichnet, dass** die Führungskurve (14) mit Führungsrandteilen, die den Stellzapfen (13) führen, leicht um den Zapfen (8) gebogen verläuft.

6. Brühgruppe nach einem Anspruch 4, **dadurch gekennzeichnet, dass** der Stellzapfen (13) und der Zapfen (8) oder dessen Verlängerung (16) in der Arbeitslage auf einer dritten Geraden (20) liegen, die mit der ersten Gerade (18) einen Winkel von bis zu 5° einschließt.

7. Brühgruppe nach einem der Ansprüche 1 bis 6, **dadurch gekennzeichnet, dass** der Brühkopf (4) entgegen der Kraft von mindestens einer Rückstellfeder (23) aus der Vorbereitungslage in die Arbeitslage verstellbar ist.

8. Brühgruppe nach einem Anspruch 7, **dadurch gekennzeichnet, dass** der Brühkopf (4) Aufnahmebuchsen (24) für das eine Ende von Rückstellfedern (23) aufweist, deren anderes Ende sich an Bestandteilen des Grundkörpers (1) abstützen.

9. Brühgruppe nach einem der Ansprüche 1 bis 8, **dadurch gekennzeichnet, dass** zwischen einer Anlageschulter des Grundkörpers (1) und/oder des Halters (3) und einem an diese anlegbaren Rand des Brühkopfes (4) eine elastische Dichtung (25) angeordnet ist.

10. Brühgruppe nach einem der Ansprüche 1 bis 9, **dadurch gekennzeichnet, dass** im Brühkopf (4) Anstechmittel (26) zum Perforieren des die Bestandteile zum Zubereiten eines Getränkes aufnehmenden Teils sowie ein von diesen durchgreifbarer Abstreifer (27), der mittels einer eingespannten Feder (28) in eine Auswerfposition verstellbar ist, gehalten sind und im Halter (3) weitere Anstechmittel (29) zum Perforieren des die Bestandteile zum Zubereiten eines Getränkes aufnehmenden Teils unter Beibehalt einer Durchströmöffnung (30) angeordnet sind.

11. Brühgruppe nach einem der Ansprüche 2 bis 10, **dadurch gekennzeichnet, dass** der Stellhebel (5) an seinem proximalen Endbereich (7) gabelartig ausgebildet ist, wobei an den Enden der Gabel jeweils ein Zapfen (8) angeordnet ist, und dass der Grundkörper (1) in gegenüberliegenden Wandbereichen Lageraugen (9) aufweist, in denen jeweils einer der Zapfen (8) drehbar gelagert ist, und dass der Brühkopf (4) entsprechend an zwei einander abgewandten gegenüberliegenden Wandbereichen Führungskurven (14) aufweist, in die jeweils ein Stellzapfen (13) eines mit jedem Gabelende gekoppelten Schwenkhebels (11) eingreift, wobei jeder Schwenkhebel (11) eine Verlängerung (16) des Zapfens (8) bildet oder aufweist, die ebenfalls in der Führungskurve (14) sitzt.

12. Brühgruppe nach einem der Ansprüche 1 bis 11, **dadurch gekennzeichnet, dass** der Grundkörper (1) eine seitliche Einschuböffnung (32) aufweist, in die ein becherähnlicher Halter (3) für ein Teil, welches Bestandteile zur Zubereitung des Getränkes beinhaltet, einschiebbar oder entnehmbar ist, wobei der Halter (3) eine quer abragende Handhabe (33) aufweist, die in der eingesetzten Betriebslage seitlich aus dem Grundkörper (1) vorragt.
